# EUROPÄISCHE PATENTSCHRIFT

(11) **EP 1 627 705 B1**
(45) Veröffentlichungstag und Bekanntmachung des Hinweises auf die Patenterteilung: **12.12.2007**
(21) Anmeldenummer: 05106771.8
(22) Anmeldetag: 22.07.2005
(51) Int. Cl.: B23Q 11/00, B23B 47/34

(54) **Handbohrgerät mit Blaslufterzeuger**
Hand drill with air blast producing apparatus
Perceuse à main avec dispositif de production d'air de soufflage

(30) Priorität: 23.07.2004 DE 102004035875
(43) Veröffentlichungstag der Anmeldung: 22.02.2006
(73) Patentinhaber: HILTI Aktiengesellschaft, 9494 Schaan (LI)
(72) Erfinder: Sanchen, Günther, 9472, Grabs (CH); Dorfmeister, Johann, 6800, Feldkirch (AT); Gstöhl, Raffael, 9494, Schaan (LI); Drobot, Marc, 6820, Frastanz (AT)
(74) Vertreter: Wildi, Roland

(56) Entgegenhaltungen:
- EP-A- 0 252 611
- DE-A1- 2 417 228
- DE-A1- 2 912 396

## Beschreibung

Die Erfindung betrifft eine Bohranordnung mit einem Bohrgerät zur Herstellung einer Bohrung in mineralischen Werkstoffen. Das Bohrgerät weist eine motorisch angetriebene Werkzeugaufnahme zur Festlegung eines Bohrwerkzeuges, insbesondere eines Diamantbohrers, auf. Ferner ist die Bohranordnung mit einem Luftleitungssystem ausgestattet, das eine Zuluftleitung aufweist, in der ein Zuluftstrom von einem Blaslufterzeuger zu der Werkzeugaufnahme herstellbar ist. Zudem weist das Luftleitungssystem eine Abluftleitung auf, in der ein Abluftstrom von einer Einblasöffnung zu einem Abscheideelement herstellbar ist. Das Abscheideelement dient dabei dem Abscheiden von Feststoffpartikeln aus dem Abluftstrom. Hierbei ist die Zuluftleitung zum Abtransport von Feststoffpartikeln, die durch das Bohrwerkzeug abgetragen werden, über die herzustellende Bohrung mit der Einblasöffnung strömungsmässig verbindbar.

Derartige Bohranordnungen ermöglichen bei der Erstellung eines Bohrloches einen Abtransport der abgetragenen Feststoffpartikel, die im Wesentlichen als Bohrklein und Bohrstaub anfallen, durch Ausblasen. Hierbei lösen sich die Feststoffpartikel leichter als beim Absaugen. Durch das vorgesehene Abscheideelement wird ein gereinigter Luftstrom abgegeben, wodurch eine Verunreinigung der Umgebung vermieden wird. Hierdurch ist es möglich, die Bohranordnung auch in hinsichtlich der Verunreinigung sensiblen Bereichen zu verwenden, wie beispielsweise innerhalb bewohnter Gebäude.

Aus der DE 29 12 396 ist eine Anordnung zum Gesteinsbohren bekannt, die einen von einer Drehschlagbohrmaschine angetriebenen Adapter aufweist. Der Adapter dient sowohl der Aufnahme eines Bohrers als auch als Lager für eine elastisch stauchbare Schutzhülse, die den Bohrer umgibt und an das zu bearbeitende Werkstück anlegbar ist. Ferner ist an dem Adapter ein Schlauch angeschlossen, über den Luft eingeblasen wird. Die Blasluft gelangt über den Adapter und eine Längsbohrung des Bohrers in das zu erzeugende Bohrloch und bläst aus diesem die abgetragenen Feststoffpartikel in die Schutzhülse. An dieser ist ein Entstaubeansatz vorgesehen, über den ein Verbindungsschlauch zu einem Staubsauger angeschlossen werden kann.

Nachteilig an der bekannten Anordnung ist, dass durch die vorgesehene Führung des Blasluftstromes durch den Adapter relativ hohe Strömungsverluste auftreten, die einen relativ starken externen Blaslufterzeuger erforderlich machen. Hierdurch ist der Wechsel von einem Einsatzort zu einem nächsten Einsatzort relativ aufwändig, insbesondere wenn zusätzlich ein Staubsauger an der Schutzhülse angeschlossen sein soll. Zudem kann die bedienende Person im Betrieb leicht durch den Blaslufterzeuger oder den Staubsauger beim Betätigen des Bohrgerätes behindert werden. Insgesamt ist die Handhabung der bekannten Bohranordnung daher relativ unkomfortabel.

Der vorliegenden Erfindung liegt die Aufgabe zugrunde, bei einer Bohranordnung die genannten Nachteile zu vermeiden und eine bessere Handhabbarkeit zu erzielen.

Erfindungsgemäss wird die Aufgabe dadurch gelöst, dass das Bohrgerät als handgeführtes Bohrgerät ausgeformt ist und das Luftleitungssystem und der Blaslufterzeuger an diesem getragen sind, um zusammen mit dem Bohrgerät eine handgeführte Einheit zu bilden. Hierdurch können das Bohrgerät, das Luftleitungssystem und der Blaslufterzeuger als kompakte Einheit gemeinsam gehandhabt werden. Auf diese Weise kann die Bohranordnung beim Transport oder beim Versetzen an einen neuen Arbeitsbereich von einer Person getragen werden und im Betrieb in komfortabler Weise von Hand geführt werden.

Vorteilhafterweise ist die Zuluftleitung über ihre gesamte Länge im Bohrgerät integriert, wodurch im Betrieb oder beim Transport der Bohranordnung eine Behinderung durch die Zuluftleitung vermieden wird.

In einer besonders bevorzugten Ausführungsform ist der Blaslufterzeuger durch einen Kühllufterzeuger zur Kühlung des Bohrwerkzeuges gebildet. Auf diese Weise kann sowohl der Abtransport des abgetragenen Materials als auch die Kühlung des Bohrwerkzeuges durch einen einzigen Luftstromerzeuger erfolgen, wodurch die Bohranordnung insgesamt kompakter ausgeformt werden kann.

Vorteilhafterweise ist der Blaslufterzeuger in axialer Verlängerung der Werkzeugaufnahme angeordnet. Hierdurch kann die Zuluftleitung relativ kurz und geradlinig ausgeformt werden, wodurch die Strömungsverluste vermindert werden. Auf diese Weise kann ein relativ kleiner Luftstromerzeuger verwendet werden, was den benötigten Bauraum und das Gewicht der Bohranordnung insgesamt reduziert und die Handhabbarkeit verbessert.

Bevorzugterweise ist die Zuluftleitung teilweise durch eine Spindellängsbohrung einer Werkzeugspindel gebildet, die die Werkzeugaufnahme trägt. Auf diese Weise benötigt die Zuluftleitung zum Teil keinen eigenen Bauraum, wodurch die Kompaktheit des Bohrgerätes und der Bohranordnung insgesamt weiter erhöht werden kann.

Vorteilhafterweise weist die Werkzeugaufnahme einen mit der Spindellängsbohrung verbundenen Aufnahmeraum auf, in den das Bohrwerkzeug einsteckbar ist. Hierdurch ist eine gute Kühlung des Bohrwerkzeuges möglich, insbesondere wenn hierfür an diesem ein entsprechender Kühlpfad beispielsweise in Form einer Längsbohrung ausgeformt ist, der mit der Spindellängsbohrung verbindbar ist.

Ferner ist der Blaslufterzeuger vorteilhafterweise über die Werkzeugspindel direkt mit der Werkzeugaufnahme verbunden. Auf diese Weise ist die Ausbildung einer besonders kurzen und verlustarmen Zuluftleitung möglich.

Dabei ist es günstig, wenn der Blaslufterzeuger ein Rotationselement mit einer Welle aufweist, die einstückig mit der Werkzeugspindel ausgeformt ist. Durch diese Konstruktionsweise wird der Blaslufterzeuger besonders gut in das Bohrgerät integriert, was eine besonders kompakte Bauweise desselben ermöglicht. Zudem wird hierdurch eine besonders dichte Zuluftleitung ausgeformt.

In einer besonders vorteilhaften Ausführungsform ist der Blaslufterzeuger als Kompressor ausgebildet, beispielsweise in Form eines Schraubenkompressors. Unter der Bezeichnung Kompressor ist dabei eine Vorrichtung zu verstehen, die mindestens ein Verdichtungsmittel aufweist, das der Kompression eines Mediums dient und dabei einen Niederdruckanschluss zur Zuführung des Mediums, beispielsweise unter im Wesentlichen atmosphärischem Druck, von einem Hochdruckanschluss zur Abgabe des Mediums in komprimierter Form strömungsmässig trennt. Hierdurch kann komprimierte Luft zum Kühlen des Bohrwerkzeuges genutzt werden. Dabei kann sich die komprimierte Luft im Bereich des Bohrloches entspannen, wodurch infolge des Joule-Thomson-Effektes besonders viel Wärmeenergie aufgenommen wird. Dies führt zu einer verbesserten Kühlung des Bohrwerkzeuges und damit zu einer längeren Standzeit desselben.

Dabei ist es günstig, wenn die Abluftleitung teilweise um die Zuluftleitung herum angeordnet ist, was eine schmale Ausformung des Luftleitungssystems ermöglicht. Hierdurch können Behinderungen durch das Luftleitungssystem vermieden werden.

Vorteilhafterweise ist die Abluftleitung teilweise durch einen Faltenbalg gebildet. Hierdurch kann sich die Längserstreckung der Abluftleitung bei einfachem Aufbau und gleichbleibend guter Abdichtung nach Aussen kontinuierlich dem Bohrfortschritt anpassen.

Dabei ist es günstig, wenn der Faltenbalg von einer Schraubenfeder gestützt ist, wodurch der Dichtring relativ stark gegen das zu bearbeitende Werkstück gepresst wird. Auf diese Weise kann die Abdichtung des Luftleitungssystems nach Aussen weiter verbessert werden, um ein möglichst verlustfreies Einblasen der sich entspannenden Druckluft in die Abluftleitung zu gewährleisten. Auf diese Weise wird der Abtransport der abgetragenen Feststoffpartikel erhöht und die Belastung der Umgebung durch Schmutz und Staub minimiert.

Ferner ist es günstig, wenn der Faltenbalg über eine parallele Teleskopiereinrichtung geführt ist. Hierdurch lässt sich im Betrieb eine sichere Führung des Faltenbalges gegenüber dem Bohrwerkzeug erzielen durch die ein seitliches Ausweichen des Faltenbalges und daraus resultierende Beschädigungen vermieden werden können.

Vorteilhafterweise trägt das Bohrgerät zusätzlich einen Sauglufterzeuger zur Herstellung eines Saugluftstromes in der Abluftleitung. Hierdurch kann der Abtransport der abgetragenen Feststoffpartikel vom Bohrwerkzeug zum Abscheider durch den zusätzlichen Saugeffekt weiter verbessert werden.

Dabei ist es günstig, wenn der Sauglufterzeuger durch einen Niederdruckanschluss des Blaslufterzeugers gebildet ist. Hierdurch wird ein zumindest teilweise geschlossenes Luftleitungssystem gebildet, das mit einem einzigen Luftstromerzeuger einen besonders guten Abtransport der abgetragenen Feststoffpartikel ermöglicht.

Die Erfindung wird nachstehend anhand eines Ausführungsbeispieles näher erläutert. Es zeigt:
Fig. eine teilweise geschnitten dargestellte, erfindungsgemässe Bohranordnung.

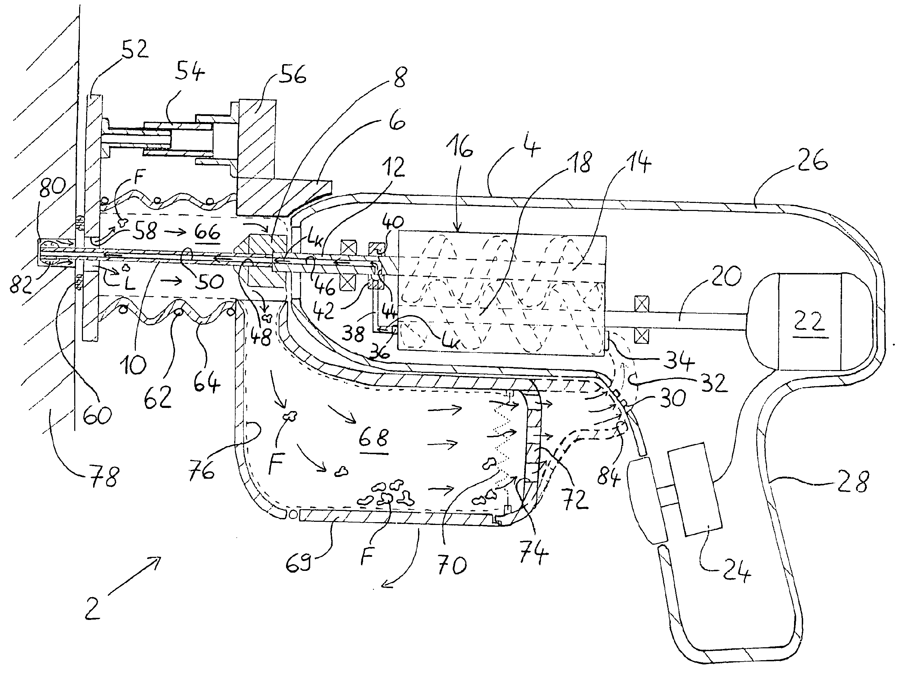

Die einzige Fig. zeigt eine Bohranordnung 2 mit einem handgeführten Bohrgerät 4 und einem Abluftreinigungsaufsatz 6 der in nicht näher dargestellter Weise fest oder lösbar an dem Bohrgerät 4 gehalten ist.

Das Bohrgerät 4 weist eine Werkzeugaufnahme 8 auf, an der ein Bohrwerkzeug 10 in Form eines Diamantbohrers festgelegt ist. Die Werkzeugaufnahme 8 ist drehfest mit einer Werkzeugspindel 12 verbunden, die einstückig mit einer ersten Welle 14 eines als Schraubenkompressor ausgebildeten Blaslufterzeugers 16 verbunden ist. Der Blaslufterzeuger 16 weist dabei eine zweite Welle 18 auf, die mit einer Antriebswelle 20 einstückig ausgeformt ist. Alternativ hierzu ist es auch möglich, dass eine der beiden Wellen 14, 18 sowohl mit der Werkzeugspindel 12 als auch mit der Antriebswelle 20 verbunden beziehungsweise mit diesen einteilig ausgeformt ist.

Die Antriebswelle 20 ist von einem Motor 22 rotatorisch antreibbar, der über einen Schalter 24 betätigbar ist. Der Schalter 24 ist in einem durch ein Gerätegehäuse 26 des Bohrgerätes 4 geformten Haltegriff 28 angeordnet, der beim Bohrvorgang ein händisches Führen des Bohrgerätes 4 zusammen mit dem daran angebrachten Abluftreinigungsaufsatz 6 erlaubt.

Oberhalb des Schalters 24 sind Eintrittsöffnungen 30 in das Gerätegehäuse 26 eingelassen. Diese sind über einen im Gerätegehäuse 26 ausgebildeten Eintrittskanal 32 mit einem Niederdruckanschluss 34 des Blaslufterzeugers 16 verbunden.

Auf seiner vom Niederdruckanschluss 34 abgewandten Seite weist der Blaslufterzeuger 16 einen Hochdruckanschluss 36 auf, an dem eine Verbindungsleitung 38 angeschlossen ist. Die Verbindungsleitung 38 verbindet den Hochdruckanschluss 36 mit einer Ringnut 40, die in einem die Werkzeugspindel 12 umgreifenden Ringelement 42 ausgeformt ist.

In die Werkzeugspindel 12 ist auf Höhe des Ringelementes 42 eine Querbohrung 44 eingelassen, die die Ringnut 40 mit einer Längsbohrung 46 der Werkzeugspindel 12 verbindet. Diese Längsbohrung 46 mündet in einen Aufnahmeraum 48 der Werkzeugaufnahme 8, in dem das Bohrwerkzeug 10 eingesteckt ist. Dabei wird eine über die Länge des Bohrwerkzeuges 10 ausgeformte Werkzeugbohrung 50 mit der Längsbohrung 46 verbunden.

Die Verbindungsleitung 38, die Ringnut 40, die Querbohrung 44 und die Längsbohrung 46 bilden somit eine in das Bohrgerät 4 integrierte Zuluftleitung, die den Hochdruckanschluss 36 des Blaslufterzeugers 16 mit der Werkzeugaufnahme 8 strömungsmässig verbindet.

Der Abluftreinigungsaufsatz 6 weist eine Anlegeplatte 52 auf, die über eine Teleskopiereinrichtung 54 verschiebbar an einem Gehäuse 56 des Abluftreinigungsaufsatzes 6 gehalten ist. In der Anlegeplatte 52 ist eine Einblasöffnung 58 ausgeformt, die im Betrieb, wie dargestellt, von dem Bohrwerkzeug 10 durchragt wird. An der vom Bohrgerät 4 abgewandten Seite der Anlegeplatte 52 ist um die Einblasöffnung 58 herum ein ringförmiges Dichtelement 60 angeordnet.

An der dem Bohrgerät 4 zugewandten Seite der Anlegeplatte 52 stützt sich um die Einblasöffnung 58 herum ein von einer Schraubenfeder 62 gestützter Faltenbalg 64 ab, der die Anlegeplatte 52 von dem Gehäuse 56 weg drückt. Dabei umschliesst der Faltenbalg 64 einen Innenraum 66, der mit einem durch das Gehäuse 56 geformten Aufnahmeraum 68 verbunden ist. Dieser Aufnahmeraum 68 kann über eine verschwenkbare Bodenplatte 69 geöffnet werden.

In dem Aufnahmeraum 68 ist ein Abscheideelement 70 in Form eines Filterelementes festgelegt. Das Abscheideelement 70 ist dabei vor einer von dem Faltenbalg 64 abgewandten Rückwand 72 des Gehäuses 56 angeordnet, in die mehrere Austrittsöffnungen 74 eingelassen sind. Der Innenraum 66 und der Aufnahmeraum 68 bilden dabei eine gestrichelt dargestellte Abluftleitung 76, die die Einblasöffnung 58 mit dem Abscheideelement 70 verbindet.

Diese Abluftleitung 76 des Abluftreinigungsaufsatzes 6 bildet zusammen mit der integrierten Zuluftleitung des Bohrgerätes 4 ein Luftleitungssystem der Bohranordnung 2.

Im Betrieb wird durch Betätigung des Schalters 24 der Motor 22 eingeschaltet. Dieser treibt über die Antriebswelle 20 den Blaslufterzeuger 16 an. Hierbei wird durch diesen einerseits eine Drehbewegung auf die Werkzeugspindel 12 und von dieser über die Werkzeugaufnahme 8 weiter auf das Bohrwerkzeug 10 übertragen. Gleichzeitig saugt der Kompressor 16 an seinem Niederdruckanschluss 34 über die Eintrittsöffnungen 30 und den Einrittskanal 32 Luft L aus der Umgebung an, wie durch eine Pfeilschar dargestellt. Diese unter atmosphärischem Druck stehende Luft L wird durch den Kompressor komprimiert und unter einem Druck von beispielsweise 2,0 bis 3,0 bar über den Hochdruckanschluss 36 in die Verbindungsleitung 38 abgegeben. Von hieraus gelangt die nun mit Lₖ bezeichnete komprimierte Luft über die Querbohrung 44 und die Längsbohrung 46 der Werkzeugspindel 12 in die Werkzeugbohrung 50 des im Aufnahmeraum 48 gehaltenen Bohrwerkzeuges 10 und tritt an dessen freien Ende aus.

Wenn die Bohranordnung 2 nun gegen ein zu bearbeitendes Werkstück 78 gedrückt wird, wird an diesem durch das drehende Bohrwerkzeug 10 eine Bohrung 80 erstellt. Die aus der Werkzeugbohrung 50 austretende komprimierte Luft Lₖ umströmt dabei einen mit Diamantsegmenten besetzten Schneidebereich 82 und entspannt sich hierbei. Bei diesem Entspannungsvorgang kann die Luft L durch den sogenannten Joule-Thomson-Effekt besonders viel Wärmeenergie aufnehmen. Hierdurch wirkt der durch den Blaslufterzeuger 16 in der integrierten Zuluftleitung erzeugte Zuluftstrom aus komprimierter Luft Lₖ als Kühlluft. Diese sorgt für eine gute Kühlung des Schneidebereiches 82 und somit zu einer längeren Standzeit des Bohrwerkzeuges 10.

Gleichzeitig wird beim Bohrvorgang die Anlegeplatte 52 gegen das Werkstück 78 gedrückt. Dabei dichtet das ringförmige Dichtelement 60 die Einblasöffnung 58 und den Innenraum 66 gegen aussen ab.

Hierdurch wird die aus der Bohrung 58 austretende entspannte Luft L über die Einblasöffnung 58 in den Innenraum 66 geblasen, d.h. die integrierte Zuluftleitung des Bohrgerätes 4 wird über die zu erstellende Bohrung 80 mit der Abluftleitung 76 des Abluftreinigungsaufsatzes 6 strömungsmässig verbunden. Dabei bläst die vom Hochdruckanschluss 36 kommende, inzwischen wieder weitestgehend entspannte Luft L die beim Bohrvorgang durch das Bohrwerkzeug 10 abgetragene Feststoffpartikel F in Form von Bohrklein und Bohrstaub in den Innenraum 66. Zudem wird auf diese Weise ein Abluftstrom entlang der Abluftleitung 76 erzeugt.

Über die Abluftleitung 76 gelangen die Feststoffpartikel F somit in den Aufnahmeraum 68, wo sie von dem Abscheideelement 70 zurückgehalten werden. Die gereinigte Luft strömt dagegen durch das Abscheideelement 70 hindurch und wird über die Austrittsöffnungen 74 an die Umgebungsluft abgegeben.

Alternativ hierzu kann die Rückwand 72 auch so geformt sein, dass eine Austrittsöffnung 84 direkt an den Eintrittsöffnungen 30 angeordnet ist, wie gestrichelt dargestellt. Hierdurch wird durch den Blaslufterzeuger 16 zumindest teilweise Luft aus dem Aufnahmeraum 68 abgesaugt. Durch diesen zumindest teilweisen Kreislauf des Luftleitungssystems kann der Luftstrom in der Abluftleitung 76 verstärkt und dadurch der Abtransport der Feststoffpartikel F von der Bohrung 80 weg verbessert werden.

Mit zunehmendem Bohrfortschritt wird das Gehäuse 56 des Abluftreinigungsaufsatzes 6 zunehmend an die Anlegeplatte 52 angenähert. Dabei wird der Faltenbalg 64 entgegen der Kraft der Schraubenfeder 62 in Längsrichtung zunehmend zusammengedrückt. Die Teleskopiereinrichtung 54 führt dabei die Relativbewegung der Anlegeplatte 52 gegenüber dem Gehäuse 56 und verhindert hierdurch ein Ausknicken des Faltenbalges 64. Statt, wie dargestellt, oberhalb des Faltenbalges 64 kann die Teleskopiereinrichtung 54 auch seitlich oder unterhalb des Faltenbalges 64 angeordnet sein.

Zum Entfernen der sich im Aufnahmeraum 68 ansammelnden Feststoffpartikel F kann das Gehäuse 56 durch Verschwenken der Bodenplatte 69 geöffnet werden.

## Patentansprüche

1. Bohranordnung (2)
mit einem Bohrgerät (4) zur Erstellung einer Bohrung (80) in mineralischen Werkstoffen,
das eine motorisch angetriebene Werkzeugaufnahme (8) zur Festlegung eines Bohrwerkzeuges (10), insbesondere eines Diamantbohrers, aufweist,
und mit einem Luftleitungssystem,
das eine Zuluftleitung, in der ein Zuluftstrom von einem Blaslufterzeuger (16) zu der Werkzeugaufnahme (8) herstellbar ist, sowie
eine Abluftleitung (76) aufweist, in der ein Abluftstrom von einer Einblasöffnung (58) zu einem zum Abscheiden von Feststoffpartikeln (F) aus dem Abluftstrom dienenden Abscheideelement (70) herstellbar ist,
wobei die Zuluftleitung zum Abtransport von abgetragenen Feststoffpartikeln (F) über die zu erstellende Bohrung (80) mit der Einblasöffnung (58) strömungsmässig verbindbar ist,
**dadurch gekennzeichnet, dass** das Bohrgerät (4) als handgeführtes Bohrgerät (4) ausgeführt ist und das Luftleitungssystem und der Blaslufterzeuger (16) zur Bildung einer handgeführten Einheit mit dem Bohrgerät (4) an diesem getragen sind.

2. Bohranordnung nach Anspruch 1, **dadurch gekennzeichnet, dass** die Zuluftleitung über ihre gesamte Länge im Bohrgerät (4) integriert ist.

3. Bohranordnung nach Anspruch 1 oder 2, **dadurch gekennzeichnet, dass** der Blaslufterzeuger (16) durch einen Kühllufterzeuger zur Kühlung des Bohrwerkzeuges (4) gebildet ist.

4. Bohranordnung nach einem der Ansprüche 1 bis 3, **dadurch gekennzeichnet, dass** der Blaslufterzeuger (16) in axialer Verlängerung der Werkzeugaufnahme (8) angeordnet ist.

5. Bohranordnung nach einem der Ansprüche 1 bis 4, **dadurch gekennzeichnet, dass** die Zuluftleitung teilweise durch eine Spindellängsbohrung (50) einer Werkzeugspindel (12) gebildet ist, die die Werkzeugaufnahme (8) trägt.

6. Bohranordnung nach Anspruch 5, **dadurch gekennzeichnet, dass** die Werkzeugaufnahme (8) einen mit der Spindellängsbohrung (50) verbundenen Aufnahmeraum (48) aufweist, in den das Bohrwerkzeug (10) einsteckbar ist.

7. Bohranordnung nach Anspruch 5 oder 6, **dadurch gekennzeichnet, dass** der Blaslufterzeuger (16) über die Werkzeugspindel (12) direkt mit der Werkzeugaufnahme (8) verbunden ist.

8. Bohranordnung nach Anspruch 7, **dadurch gekennzeichnet, dass** der Blaslufterzeuger (16) ein Rotationselement mit einer Welle (14) aufweist, die einstückig mit der Werkzeugspindel (12) ausgeformt ist.

9. Bohranordnung nach einem der Ansprüche 1 bis 8, **dadurch gekennzeichnet, dass** der Blaslufterzeuger (16) als Kompressor ausgebildet ist.

10. Bohranordnung nach einem der Ansprüche 1 bis 9, **dadurch gekennzeichnet, dass** die Abluftleitung (76) zumindest teilweise um die Zuluftleitung herum angeordnet ist

11. Bohranordnung nach einem der Ansprüche 1 bis 10, **dadurch gekennzeichnet, dass** die Abluftleitung (76) teilweise durch einen Faltenbalg (64) gebildet ist.

12. Bohranordnung nach Anspruch 11, **dadurch gekennzeichnet, dass** der Faltenbalg (64) von einer Schraubenfeder (62) gestützt ist.

13. Bohranordnung nach Anspruch 11 oder 12, **dadurch gekennzeichnet, dass** der Faltenbalg (64) über eine parallele Teleskopiereinrichtung (54) geführt ist.

14. Bohranordnung nach einem der Ansprüche 1 bis 13, **dadurch gekennzeichnet, dass** das Bohrgerät (4) zusätzlich einen Sauglufterzeuger zur Herstellung eines Saugluftstromes in der Abluftleitung (76) trägt.

15. Bohranordnung nach Anspruch 14, **dadurch gekennzeichnet, dass** der Sauglufterzeuger durch einen Niederdruckanschluss (34) des Blaslufterzeugers (16) gebildet ist.

## Claims

1. A drilling assembly (2) comprising a drilling tool (4) for making a hole (80) in mineral materials, said drilling tool (4) having a motor-driven tool holder (8) for fixing a drill bit (10), in particular a diamond drill bit, and comprising an air-conducting system, which includes an air feed pipe, in which a stream of incoming air can be made to flow from an air blast generator (16) to the tool holder (8), as well as an air outlet pipe (76), in which a stream of outgoing air can be made to flow from an air-injection opening (58) to a separating element (70) which serves to separate solid particles (F) from the stream of outgoing air, in which case, for the purpose of carrying away the removed solid particles (F), the air feed pipe is in flow communication with the air-injection opening (58) via the drilled hole being made, **characterized in that** the drilling tool (4) takes the form of a hand-operated drilling tool (4) and the air-conducting system and air blast generator (16) are carried on said drilling tool (4) so as to form an integral hand-operated unit.

2. A drilling assembly according to Claim 1, **characterized in that** the air feed pipe is integrated over its entire length in the drilling tool (4).

3. A drilling assembly according to Claim 1 or 2, **characterized in that** the air blast generator (16) consists of a cooling-air generator for cooling the drill bit (4).

4. A drilling assembly according to one of Claims 1 to 3, **characterized in that** the air blast generator (16) is disposed in the axial extension of the tool holder (8).

5. A drilling assembly according to one of Claims 1 to 4, **characterized in that** the air feed pipe is partly formed by a longitudinal bore (50) of a tool spindle (12), which carries the tool holder (8).

6. A drilling assembly according to Claim 5, **characterized in that** the tool holder (8) has a receiving space (48), communicating with the longitudinal bore (50), into which the drill bit (10) can be inserted.

7. A drilling assembly according to Claim 5 or 6, **characterized in that** the air blast generator (16) is directly connected to the tool holder (8) via the tool spindle (12).

8. A drilling assembly according to Claim 7, **characterized in that** the air blast generator (16) has a rotary element with a shaft (14) which is formed in one piece with the tool spindle (12).

9. A drilling assembly according to one of Claims 1 to 8, **characterized in that** the air blast generator (16) takes the form of a compressor.

10. A drilling assembly according to one of Claims 1 to 9, **characterized in that** the air outlet pipe (76) is disposed at least in part around the air feed pipe.

11. A drilling assembly according to one of Claims 1 to 10, **characterized in that** the air outlet pipe (76) is formed in part by a bellows (64).

12. A drilling assembly according to Claim 11, **characterized in that** the bellows (64) is supported by a helical spring (62).

13. A drilling assembly according to Claim 11 or 12, **characterized in that** the bellows (64) is guided via a parallel telescopic device (54).

14. A drilling assembly according to one of Claims 1 to 13, **characterized in that** the drilling tool (4) also carries a vacuum generator for producing a stream of suction air in the air outlet pipe (76).

15. A drilling assembly according to Claim 14, **characterized in that** the vacuum generator is formed by a low-pressure connection (34) of the air blast generator (16).

## Revendications

1. Agencement de perçage (2) comprenant une perceuse (4) qui est destinée à réaliser un trou (80) dans des matières minérales et qui comporte un raccord d'outil à entraînement motorisé (8) pour bloquer un foret (10), en particulier un foret diamanté, et comprenant un système de conduite d'air qui comporte une conduite d'air entrant, dans laquelle un courant d'air entrant peut être créé depuis un générateur d'air soufflé (16) vers le raccord d'outil (8), ainsi qu'une conduite d'air sortant (76), dans laquelle un courant d'air sortant peut être créé depuis une ouverture de soufflage (58) vers un élément séparateur (70) servant à séparer des particules de matière solide (F) du courant d'air sortant, la conduite d'air entrant pouvant être reliée fluidiquement à l'ouverture de soufflage (58) pour évacuer des particules enlevées de matière solide (F) à travers le trou à réaliser (80), **caractérisé en ce que** la perceuse (4) est conformée en perceuse à guidage manuel (4), et le système de conduite d'air et le générateur d'air soufflé (16) sont portés par la perceuse (4) pour former avec celle-ci un ensemble à guidage manuel.

2. Agencement de perçage selon la revendication 1, **caractérisé en ce que** la conduite d'air entrant est intégrée sur toute sa longueur dans la perceuse (4).

3. Agencement de perçage selon la revendication 1 ou 2, **caractérisé en ce que** le générateur d'air soufflé (16) est formé par un générateur d'air de refroidissement pour refroidir le foret (4).

4. Agencement de perçage selon une des revendications 1 à 3, **caractérisé en ce que** le générateur d'air soufflé (16) est disposé dans le prolongement axial du raccord d'outil (8).

5. Agencement de perçage selon une des revendications 1 à 4, **caractérisé en ce que** la conduite d'air entrant est formée partiellement par un trou longitudinal de broche d'outil (50) d'une broche d'outil (12) que porte le raccord d'outil (8).

6. Agencement de perçage selon la revendication 5, **caractérisé en ce que** le raccord d'outil (8) comporte un espace récepteur (48) qui est relié au trou longitudinal de broche (50) et dans lequel le foret (10) peut être inséré.

7. Agencement de perçage selon la revendication 5 ou 6, **caractérisé en ce que** le générateur d'air soufflé (16) est relié directement au raccord d'outil (8) par l'intermédiaire de la broche d'outil (12).

8. Agencement de perçage selon la revendication 7, **caractérisé en ce que** le générateur d'air soufflé (16) comporte un élément de rotation avec un arbre (14) conçu d'un seul tenant avec la broche d'outil (12).

9. Agencement de perçage selon une des revendications 1 à 8, **caractérisé en ce que** le générateur d'air soufflé (16) est conformé en compresseur.

10. Agencement de perçage selon une des revendications 1 à 9, **caractérisé en ce que** la conduite d'air sortant (76) est disposée au moins partiellement autour de la conduite d'air entrant.

11. Agencement de perçage selon une des revendications 1 à 10, **caractérisé en ce que** la conduite d'air sortant (76) est formée partiellement par un soufflet plissé (64).

12. Agencement de perçage selon la revendication 11, **caractérisé en ce que** le soufflet plissé (64) est soutenu par un ressort hélicoïdal (62).

13. Agencement de perçage selon la revendication 11 ou 12, **caractérisé en ce que** le soufflet plissé (64) est guidé par l'intermédiaire d'un dispositif télescopique parallèle (54).

14. Agencement de perçage selon une des revendications 1 à 13, **caractérisé en ce que** la perceuse (4) porte en plus un générateur d'air aspiré pour créer un courant d'air aspiré dans la conduite d'air sortant (76).

15. Agencement de perçage selon la revendication 14, **caractérisé en ce que** le générateur d'air aspiré est formé par un raccord à basse pression (34) du générateur d'air soufflé (16).
